# EUROPÄISCHE PATENTANMELDUNG

(11) **EP 1 220 294 A1**
(43) Veröffentlichungstag der Anmeldung: **03.07.2002**
(21) Anmeldenummer: 01000716.9
(22) Anmeldetag: 06.12.2001
(51) Int. Cl.: H01J 61/35, H01J 61/52, F21V 7/00

(54) **Hochdruckentladungslampe**

(30) Priorität: 19.12.2000 DE 10063376
(71) Anmelder: Philips Corporate Intellectual Property GmbH, 52066 Aachen (DE); Koninklijke Philips Electronics N.V., 5621 BA Eindhoven (NL)
(72) Erfinder: Klinkenberg, Klaus c/o Philips Corp.Int.Prop. GmbH, 52066 Aachen (DE); Mönch, Dr. Holger c/o Philips Corp.Int.Prop. GmbH, 52066 Aachen (DE); Ritz, Arndt c/o Philips Corp.Int.Prop. GmbH, 52066 Aachen (DE)
(74) Vertreter: Volmer, Georg, Dipl.-Ing.

(57) **Zusammenfassung**

Die Erfindung betrifft eine Hochdruckentladungslampe mit einem im wesentlichen langgestreckten Kolben, der zwei Halsbereiche und in einer mittleren Position eine vakuumdichte Entladungskammer besitzt. Des weiteren betrifft die Erfindung noch eine Reflektorlampe und ein Projektionssystem mit einer solchen Hochdruckentladungslampe. Ein Nachteil bekannter Lampen sind zu hohe Temperaturen an kritischen Bauteilen. Gemäß der Erfindung wird daher vorgeschlagen, dass die Hochdruckentladungslampe wenigstens in einem Halsbereich wenigstens teilweise mit einer Reflexionsschicht versehen ist. Die Reflexionsschicht reflektiert Strahlung im gesamten Spektrum (ultraviolett, sichtbar, infrarot) und wird insbesondere als Wärmeschutzschicht eingesetzt, welche die auf den Halsbereich am Lampenende auftreffende und als Wärmestrahlung wirkende Strahlung reflektiert, so dass eine zusätzliche Erwärmung verhindert oder zumindest reduziert wird.

## Beschreibung

### Hochdruckentladungslampe

Die Erfindung betrifft eine Hochdruckentladungslampe mit einem im wesentlichen langgestreckten Kolben, der zwei Halsbereiche und in einer mittleren Position eine vakuumdichte Entladungskammer besitzt. Des weiteren betrifft die Erfindung noch eine Reflektorlampe und ein Projektionssystem mit einer solchen Hochdruckentladungslampe.

Eine solche Hochdruckentladungslampe ist beispielsweise aus US 5,109,181 bekannt. Die Hochdruck-Quecksilberdampfentladungslampe besitzt einen Kolben aus einem hochtemperaturfesten Material, der zwei Elektroden aus Wolfram und eine Füllung enthält, die im wesentlichen aus Edelgas, Quecksilber und im Betriebszustand freien Halogen besteht. Der hochtemperaturfeste Kolben kann zum Beispiel aus Quarzglas oder einem Aluminiumoxid hergestellt sein. Die dargestellten Lampen besitzen einen ellipsoidförmigen oder zylindrischen Lampenkolben aus Quarzglas. An die Kolbenenden schließen sich zylindrische Quarzteile an, in welche Molybdänfolien vakuumdicht eingeschmolzen sind. Im Bereich dieser vakuumdichten Durchführungen, welche die Entladungskammer begrenzen, werden Molybdänfolien eingesetzt, da so eine bessere vakuumdichte Stromzuführung erreicht wird. Die Molybdänfolien sind jeweils mit inneren Elektroden und äußeren Stromzuführungsdrähten verbunden. Im Betrieb der Lampe wird die Füllung des Kolbens angeregt und befindet sich in einem Entladungszustand.

Gattungsgemäße Gasentladungslampen, die als High Intensity Discharge Lamps (HID) bezeichnet werden, werden bevorzugt als Lichtquellen in digitalen Projektionssystemen wie Video-Projektoren verwendet. Im Betrieb sind die Lampen meist in einem Reflektor eingesetzt, so dass aus Sicherheitsgründen oft ein geschlossenes Reflektorsystem aus Lampe und Reflektor als Reflektorlampe angeboten wird. Aufgrund der Anforderung der Verkleinerung an Projektoren entsteht die Notwendigkeit, auch die Reflektorsysteme zu verkleinern. Ein wesentliches Hemmnis zur Miniaturisierung sind dabei die zu hohen Temperaturen an kritischen Bauteilen. Beispielsweise wird eine Lampe mit einem im wesentlichen langgestreckten Kolben meist auf der optischen Achse im Reflektor angeordnet, so dass sich die Entladungskammer im Fokus befindet. Dann ist die Länge des freien Endes des Lampenkolbens durch die Wärmeleitfähigkeit des Kolbenmaterials (z. B. Quarzglas) bestimmt. Da das Molybdänband im Außenbereich der Durchführung mit dem in der Luft enthaltenen Sauerstoff reagieren kann und diese Reaktion bei Temperaturen oberhalb 350°C zu einer verkürzten Lebensdauer führt, muss im Abschnitt von der heißen Entladungskammer bis zur Position des Molybdänbandes eine ausreichende Wärmemenge abgegeben werden. Die mittels Wärmeleitung in Richtung Kolbenende transportierte Energie muss durch Konvektion und Strahlung an die Umgebung abgegeben werden.

Wenn die Lampe aus Sicherheitsgründen in einem geschlossenen System mit Reflektor und Frontscheibe (Reflektorlampe) angeordnet ist, entstehen bei Verkleinerung des Reflektorsystems im Inneren Lufttemperaturen, die die Temperatur des Molybdänbandes in die Nähe der Grenztemperatur bringen können. Dadurch wird die Lebensdauer der Lampe verkürzt. Aus diesen Gründen ergibt sich bei bekannten Lampen der Nachteil, dass dieser Abstand nur eingeschränkt verkürzt werden kann, so dass die Größe der Lampe und des Reflektorsystems nicht verringert werden kann.

Die Aufgabe der Erfindung ist daher, eine Hochdruckentladungslampe zu schaffen, die eine höhere Lebensdauer durch verbesserte thermische Eigenschaften bietet.

Die Aufgabe wird durch eine Hochdruckentladungslampe gelöst, die wenigstens in einem Halsbereich wenigstens teilweise mit einer Reflexionsschicht versehen ist. Die Reflexionsschicht reflektiert Strahlung im gesamten Spektrum (ultraviolett, sichtbar, infrarot). Die Reflexionsschicht wind insbesondere als Wärmeschutzschicht eingesetzt, welche die auf den Halsbereich am Lampenende auftreffende und als Wärmestrahlung wirkende Strahlung reflektiert, so dass eine zusätzliche Erwärmung verhindert oder zumindest reduziert wird. Die zusätzliche Wärmestrahlung im Halsbereich der Lampe wird beispielsweise durch weitere Miniaturisierung oder die Verwendung von Ellipsoidspiegeln für Reflektorlampen hervorgerufen. Im Gegensatz zu häufig eingesetzten Parabolspiegeln, die nahezu parallele Lichtstrahlung erzeugen, bieten Ellipsoidspiegel eine Möglichkeit zur Miniaturisierung, da ein zweiter Brennpunkt vorhanden ist. Solche Reflektoren bündeln mehr Strahlung auf den Halsbereich der Lampe. Die zusätzliche Erwärmung der Lampe durch diese Wärmestrahlung wird mittels der erfindungsgemäßen Reflexionsschicht verhindert. Daher ist die Reflexionsschicht vorzugsweise so ausgestaltet, dass sie Strahlung im sichtbaren und infraroten Spektralbereich reflektiert.

In einer bevorzugten Weiterbildung der Erfindung ist die Reflexionsschicht im Halsbereich außen auf dem Kolben aufgebracht. Das Aufbringen der Reflexionsschicht auf der Außenfläche des gefertigten Kolbens im Halsbereich eignet sich in besonders günstiger Weise zur Realisierung der erfindungsgemäßen Lampe. Es können bekannte Herstellungstechniken angewendet werden. Der Kolben kann beispielsweise im gewünschten Bereich mit entsprechenden Schichten bedampft werden. Denkbar ist auch eine mechanische Befestigung einer Reflexionsschicht in Form einer Folie Es kann vorteilhaft sein, den Halsbereich mit der Reflexionsschicht zu versehen, die entsprechende Stirnseite des Kolbens jedoch unbeschichtet zu lassen.

Die Reflexionsschicht kann ein dielektrisches Interferenzfilter oder eine Schicht aus einem metallischen Material oder einem Metalloxyd sein. Das dielektrische Interferenzfilter wird vorzugsweise durch ein optisches Vielschichtsystem gebildet, welches aus dielektrischen Schichten (insbesondere aus Metalloxyd) mit abwechselnd hohem und niedrigem Brechungsindex besteht. Derartige Vielschichtsysteme (Schichtstapel) bieten einen sehr hohen Reflexionsindex, der durch Wahl geeigneter Materialien und Schichtdicken gut an die Anforderungen angepasst werden kann. Ebenso kann ein bestimmter spektraler Verlauf des Reflexionsindex eingestellt werden.

Für eine vorteilhafte Ausgestaltung der erfindungsgemäßen Lampe ist die Reflexionsschicht im Halsbereich auf einer Breite von höchstens 10mm vom Anfang des Kolbens an angeordnet. Es hat sich gezeigt, dass eine Begrenzung der Ausdehnung der Reflexionsschicht vorteilhaft ist. Die Reflexionsschicht beginnt am Anfang des Kolbens und dehnt sich im Halsbereich in Richtung der Entladungskammer bis zu einer maximalen Breite von 10mm auf der Außenfläche aus. Bei einer in einem Reflektor eingebauten Lampe befindet sich die Reflexionsschicht an dem Anfang des Kolbens, der frei in der Öffnung des Reflektors angeordnet ist. An diesen Stellen soll die zusätzliche Erwärmung der Lampe durch auftreffende Wärmestrahlung verhindert werden. Eine weitere Beschichtung des Kolbens mit einer Reflexionsschicht in der Nähe der Entladungskammer kann dagegen die Abstrahlung der in der Entladungskammer erzeugten Wärme durch Verminderung des mittleren Emissionskoeffizienten für die hier besonders wichtigen Wellenlängenbereiche im Infrarot behindern. Daher ist es für die thermischen Eigenschaften, die insbesondere die Lebensdauer der Lampe beeinflussen, günstig, die Breite der Reflexionsschicht zu begrenzen.

Die Aufgabe der Erfindung wird weiterhin noch durch eine Reflektorlampe mit einem Reflektor und einer entlang der optischen Achse im Reflektor angeordneten Hochdruckentladungslampe gelöst, deren der Reflektoröffnung zugewandte Halsbereich wenigstens teilweise mit einer Reflexionsschicht versehen ist. In der Reflektorlampe ist die erfindungsgemäße Hochdruckentladungslampe zumindest teilweise von einem Reflektor umgeben, so dass weniger Wärme abgegeben werden kann. Das heißt, die Lampe erwärmt sich noch schneller. Im Inneren der Reflektorlampe würden insbesondere bei geringer Größe Lufttemperaturen entstehen, die die Temperatur des Molybdänbandendes in die Nähe der kritischen Grenztemperatur bringen. Die Reflektorlampe mit einer Hochdruckentladungslampe gemäß der Erfindung bietet insbesondere Vorteile gegenüber bekannten Lampen, wenn der Reflektor an der Vorderseite mit einer transparenten Scheibe abgeschlossen ist.

Vorteilhafter Weise ist auf der Innenseite des Reflektors ein Kaltlichtspiegel angeordnet, und die Reflexionsschicht besteht aus einem Metalloxid, insbesondere aus Zirkonoxid, oder einem dielektrischen Interferenzfilter. Häufig ist die Innenseite von Reflektoren mit einem Kaltlichtspiegel beschichtet. Dann eignet sich eine Beschichtung mit einem dielektrischen Interferenzfilter oder einem Metalloxid gut als Reflexionsschicht, weil die spektralen Reflexionseigenschaften gut für das vom Kaltlichtspiegel reflektierte Spektrum geeignet sind. Analog eignet sich eine Reflexionsschicht aus einem metallischen Material, insbesondere aus Aluminium, oder einem dielektrischen Interferenzfilter gut, wenn auf der Innenseite des Reflektors eine metallische Reflektorschicht angeordnet ist.

Dielektrische Interferenzfilter, d.h. Schichtstapel mit Schichten verschiedener Metalloxide mit abwechselnd hohem und niedrigem Brechungsindex, eignen sich besonders gut als Wärmeschutzschicht auf den Kolben. Durch geeignete Wahl der Dicken der einzelnen Schichten des Interferenzfilters kann das Reflexionsgebiet der Reflexionsschicht (Verspiegelung) für bestimmte Wellenlängenbereiche und die auftretenden Einfallswinkel in der speziellen geometrischen Situation des Lampenkolbens angepasst werden. Durch ein optisches Vielschichtsystem können bessere Reflexionswerte als bei Einzelschichten erreicht werden. Darüber hinaus hat ein solches Vielschichtsystem einen mittleren Emissionskoeffizienten für die Wärmeabstrahlung, der ungefähr so groß wie der von Quarz ist, aus dem der Lampenkolben meist besteht. Daher gibt die Reflexionsschicht die Wärme in ähnlicher Weise ab wie der unbeschichtete Kolben der Lampe. Dagegen haben Reflexionsschichten aus Aluminium beispielsweise einen geringeren Emissionskoeffizienten, weshalb derartig beschichtete Lampen die in der Entladungskammer erzeugte Wärme weniger gut ableiten können. Dielektrische Vielschichtsysteme haben noch den Vorteil einer hohen mechanischen Stabilität, z. B. eine hohe Kratzfestigkeit und eine hohe Abriebbeständigkeit, und einer hohen Alterungsbeständigkeit. Dies ermöglicht eine einfache Handhabung der Lampen bei der Montage im Reflektor oder bei offenen System auch beim Einbau bzw. Austausch der Lampe.

Des weiteren wird die Aufgabe der Erfindung noch durch ein Projektionssystem mit einer Hochdruckentladungslampe oder einer Reflektorlampe gelöst. Insbesondere bei Projektionssystemen wird eine weitere Verkleinerung der Geräte angestrebt. Daher eignen sich die erfindungsgemäßen und in den verschiedenen Ausführungsarten beschriebenen Lampen besonders gut zur Verwendung mit solchen Projektionssystemen.

Im folgenden soll die erfindungsgemäße Hochdruckentladungslampe anhand eines Ausführungsbeispiels näher erläutert werden. Dabei zeigen
- Figur 1:: eine Reflektorlampe mit einer Lampe und einem Reflektor gemäß der Erfindung und
- Figur 2:: ein Diagramm der gemessenen Temperatur am Ende eines Lampenkolbens ohne Reflexionsschicht, mit einer Zirkonoxidschicht und mit einer Aluminiumschicht.

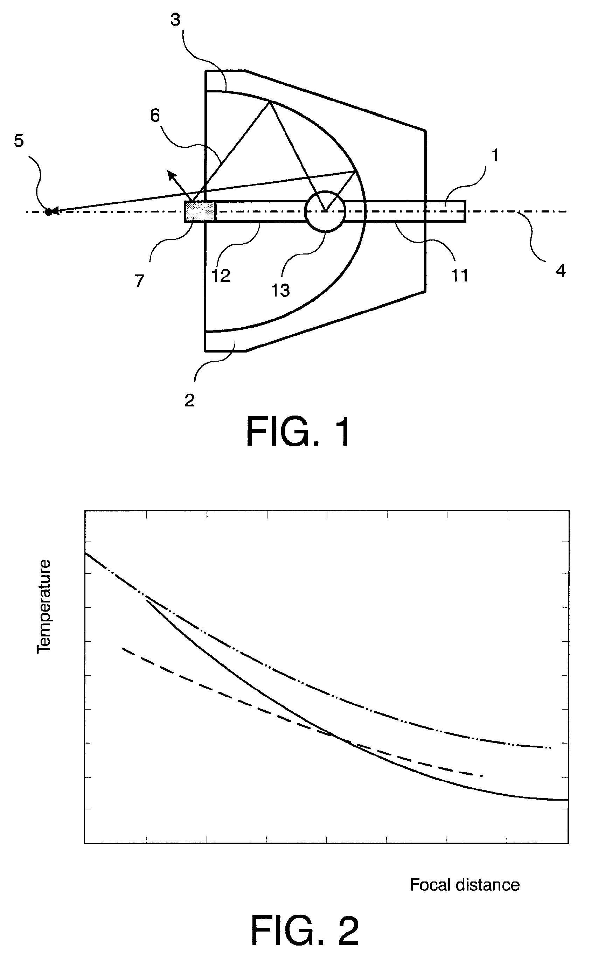

In der Figur 1 ist eine Hochdruckentladungslampe 1 dargestellt, die in einem Reflektor 2 angeordnet ist. Im dargestellten Ausführungsbeispiel ist der Reflektor 2 auf der Innenseite mit einem Kaltlichtspiegel 3 versehen. Die langgestreckte Lampe 1 besitzt einen Kolben aus zwei zylinderförmigen Halsbereichen 11, 12 und einer elliptischen Entladungskammer 13, der im Reflektor 2 auf dessen optischer Achse 4 angeordnet ist. Die in der Entladungskammer 13 erzeugte Strahlung wird von der Spiegelschicht 3 des Reflektors 2 auf den Fokus 5 abgebildet. Aufgrund der endlichen Ausdehnung der Lichtquelle, es liegt tatsächlich natürlich keine Punktquelle sondern ein Lichtbogen vor, wird nicht das gesamte erzeugte Licht in den Fokus 5 abgebildet, sondern ein Teil der Strahlung wird auch auf den Halsbereich 12 des Kolbens 1 reflektiert. Der Halsbereich 12 ist am Anfang mit einer Reflexionsschicht 7 versehen. Die als Wärmeschutzschicht wirkende Reflexionsschicht 7 reflektiert die auftreffende Strahlung und verhindert so eine zusätzliche Erwärmung des Lampenkolbens 1.

Die Figur 2 zeigt einen Vergleich der gemessenen Temperatur einer Lampe ohne Reflexionsschicht (durchgezogene Kurve), mit einer Zirkonoxidschicht (gestrichelte Kurve) und einer Aluminiumschicht (punkt-gestrichelte Kure). Auf der Abszisse ist der Abstand zwischen der Entladungskammer 13 und dem zweiten Fokuspunkt des elliptischen Reflektors 2 aufgetragen, auf die die Lampe fokussiert ist. Es wurden jeweils die Temperaturen am Lampenende in einem Reflektor mit einem Kaltlichtspiegel gemessen.

Bei größeren Abständen als 70mm bleibt das Ende einer unbeschichteten Lampe kälter als das einer beschichteten Lampe, weil der Emissionskoeffizient des Quarzes des Kolbens 1 höher ist als der der Reflexionsschicht 7 und die thermische Belastung des Lampenendes 12 nahezu ausschließlich durch Wärmeleitung von der Entladungskammer 13 verursacht wird. Bei kleinern Abständen als 70 mm steigt die zusätzliche Belastung durch im Reflektor 2 reflektierte Strahlung auf das Lampenende 12. Mit einer Reflexionsschicht 7 aus Zirkonoxid werden deutlich geringere Temperaturen erreicht, die den Bau kleinerer optischer Systeme ermöglichen, ohne dass der Kolben 1 eine kritische Temperatur erreicht.

Mit einer Aluminiumschicht weist die Lampe eine höhere Temperatur als ohne Beschichtung auf, da hier ein Kaltlichtspiegel verwendet wurde und sich der geringe Emissionskoeffizient der Reflexionsschicht negativ durch eine verminderte Abstrahlung im Bereich des Lampenendes und damit durch eine Temperaturerhöhung auswirkt. Dagegen weist eine mit einer Aluminiumschicht 7 versehene Lampe 1 in einem Reflektor 2 mit einer metallischen Reflexionsschicht 3 geringere Temperaturen als ohne Reflexionsschicht oder mit einer Zirkonoxidschicht auf. Dann reduziert die Aluminiumverspiegelung die thermische Belastung, weil die vom Reflektor 2 reflektierte IR-Strahlung das Lampenende zusätzlich zu den Anteilen Wärmeleitung und absorbiertes Licht erwärmt. Es ist offensichtlich, dass in Abhängigkeit von der im verwendeten Reflektor aufgebrachten Spiegelschicht 3 und dem Abstand des Fokus 5 des Reflektors 2 zum Lampenende sowie der Länge des Halsbereiches 12 eine geeignete Reflexionsschicht gewählt werden muss. Damit kann eine weitere Miniaturisierung von Reflektorlampen und Geräten, in denen eine solche Lampe verwendet wird, insbesondere durch Einsatz eines Ellipsoidspiegels anstelle eines Parabolspiegels erreicht werden.

## Patentansprüche

1. Hochdruckentladungslampe (1) mit einem im wesentlichen langgestreckten Kolben (1), der zwei Halsbereiche (11, 12) und in einer mittleren Position eine vakuumdichte Entladungskammer (13) besitzt,
**dadurch gekennzeichnet,**
**dass** wenigstens ein Halsbereich (12) wenigstens teilweise mit einer Reflexionsschicht (7) versehen ist.

2. Hochdruckentladungslampe (1) nach Anspruch 1,
**dadurch gekennzeichnet,**
**dass** die Reflexionsschicht (7) Strahlung im sichtbaren und infraroten Spektralbereich reflektiert.

3. Hochdruckentladungslampe (1) nach Anspruch 1,
**dadurch gekennzeichnet,**
**dass** die Reflexionsschicht (7) im Halbereich (12) außen auf dem Kolben (1) aufgebracht ist.

4. Hochdruckentladungslampe (1) nach Anspruch 3,
**dadurch gekennzeichnet,**
**dass** die Reflexionsschicht (7) ein dielektrisches Interferenzfilter oder eine Schicht aus einem metallischen Material oder einem Metalloxyd ist.

5. Hochdruckentladungslampe (1) nach Anspruch 4,
**dadurch gekennzeichnet,**
**dass** die Reflexionsschicht (7) im Halsbereich (12) auf einer Breite von höchstens 10mm vom Anfang des Kolbens (1) an angeordnet ist.

6. Hochdruckentladungslampe (1) nach Anspruch 4,
**dadurch gekennzeichnet,**
**dass** das dielektrische Interferenzfilter durch ein optisches Vielschichtsystem aus Schichten mit abwechselnd hohem und niedrigem Brechungsindex, insbesondere aus Metalloxyd, gebildet ist.

7. Reflektorlampe mit einem Reflektor (2) und einer entlang der optischen Achse (4) im Reflektor (2) angeordneten Hochdruckentladungslampe (1) mit einem im wesentlichen langgestreckten Kolben (1), der zwei Halsbereiche (11, 12) und in einer mittleren Position eine vakuumdichte Entladungskammer (13) besitzt,
**dadurch gekennzeichnet,**
**dass** der der Reflektoröffnung zugewandte Halsbereich (12) wenigstens teilweise mit einer Reflexionsschicht (7) versehen ist.

8. Reflektorlampe nach Anspruch 7,
**dadurch gekennzeichnet,**
**dass** auf der Innenseite des Reflektors (2) ein Kaltlichtspiegel (3) angeordnet ist, und dass die Reflexionsschicht (7) aus einem Metalloxid, insbesondere aus Zirkonoxid, oder einem dielektrischen Interferenzfilter besteht.

9. Reflektorlampe nach Anspruch 7,
**dadurch gekennzeichnet,**
**dass** auf der Innenseite des Reflektors (2) eine metallische Reflektorschicht (3) angeordnet ist, und dass die Reflexionsschicht (7) aus einem metallischen Material, insbesondere aus Aluminium, oder einem dielektrischen Interferenzfilter besteht.

10. Projektionssystem mit einer Hochdruckentladungslampe (1) nach einem der Ansprüche 1 bis 6 oder einer Reflektorlampe nach einem der Ansprüche 7 bis 9.
